# EUROPÄISCHE PATENTSCHRIFT

(11) **EP 0 414 069 B1**
(45) Veröffentlichungstag und Bekanntmachung des Hinweises auf die Patenterteilung: **22.03.1995**
(21) Anmeldenummer: 90115420.3
(22) Anmeldetag: 10.08.1990
(51) Int. Cl.: H01H 47/04

(54) **An ein Wechselspannungsnetz anschaltbares elektomagnetisches Schaltgerät**
Electromagnetic switching device connectable to an alternating current line
Appareil de commutation électromagnétique à connecter au réseau alternatif

(30) Priorität: 22.08.1989 DE 8910048 U
(43) Veröffentlichungstag der Anmeldung: 27.02.1991
(73) Patentinhaber: SIEMENS AKTIENGESELLSCHAFT, 80333 München (DE)
(72) Erfinder: Mitlmeier, Norbert, Dipl.-Ing. (FH), D-8451 Ursensollen (DE)

(56) Entgegenhaltungen:
- DE-A- 1 588 196
- DE-A- 3 027 183
- DE-B- 1 247 486
- DE-C- 1 051 978
- GB-A- 1 466 246

## Beschreibung

Die Erfindung bezieht sich auf ein an ein Wechselspannungsnetz anschaltbares elektromagnetisches Schaltgerät mit Gleichstrommagnetsystem und einer Schalteinrichtung mit der Erregerspule vorgeschalteten Gleichrichtern und verzögerter Umschaltung von Anzugs- auf Halteerregung, wobei bei Halteerregung zwischen Wechselspannungsnetz und Halteerregungsgleichrichter ein Transformator geschaltet ist.

Die notwendige Erregung eines Gleichstromantriebs wird bestimmt durch den Kraftbedarf eines Schaltgerätes über den Magnetweg, d.h. im eingeschalteten Zustand des Schaltgerätes bzw. im geschlossenem Zustand des Magnetsystems kann in der Regel die Erregung des Gleichstromantriebs erheblich gegenüber der Anzugserregung auf die Halteerregung reduziert werden. Dies kann durch Vorschalten von Widerständen oder durch Umschalten auf spezielle Haltewicklungen beim Schließen des Eisenkreises erfolgen. Bei einer bekannten Schaltung der o.g. Art wird beim Einschaltvorgang die volle Gleichrichter-Netzwechselspannung auf die Spule gelegt, wodurch die notwendige Anzugs- oder Einschalterregung erzeugt wird. Im eingeschalteten Zustand wird durch einen verzögert öffnenden Kontakt des elektrischen Schaltgerätes auf Halteerregung umgeschaltet. Hier wird ein am Netz liegender Transformator wirksam, der auf der Sekundärseite über Gleichrichter mit einer wesentlich reduzierten Versorgungsspannung an der Erregerspule liegt. Da die Gleichrichter für die Halteerregung praktisch immer parallel zur Erregerspule des elektromagnetischen Schaltgerätes liegen, wirken sie beim Ausschalten des Schaltgerätes als Freilaufkreis, so daß ein relativ hoher Ausschaltverzug für das Schaltgerät bewirkt wird. Außerdem müssen die Gleichrichter für die Halteerregung beim Umschalten auf diese für den Freilaufstrom, der durch die Anzugserregung bestimmt ist, ausgelegt sein.

Der Erfindung liegt somit die Aufgabe zugrunde, das Schaltgerät der obengenannten Art weiterhin technisch zu verbessern. Dies wird auf einfache Weise dadurch erreicht, daß zwischen verzögerter Umschaltung und dem Halteerregungsgleichrichter eine gegensinnig gepolte Zenerdiode eingeschaltet ist. Hierdurch ist der Freilaufkreis beim Ausschalten des Gerätes über die Halteerregungsgleichrichter nicht wirksam. Ist parallel zur Erregerspule eine mit einer gegensinnig gepolten Zenerdiode in Reihe liegende Freilaufdiode geschaltet, so bestimmen diese Dioden den Ausschaltverzug des Gerätes. Die Gleichrichter für die Halteerregung werden nicht mit dem Anzugsstrom belastet und können somit günstiger dimensioniert werden. Solange die Summe der Diodenflußspannung und Zenerspannung dieser Reihenschaltung kleiner ist als die Summe der Diodenflußspannungen der Halteerregungsgleichrichter, addiert mit der Zenerspannung der zwischen Haltegleichrichter und verzögerter Umschaltung liegenden Zenerdiode ist, kommutiert der Strom beim Ausschalten der Anzugserregung mittels des verzögerten Umschalters auf die zur Erregerspule parallel liegenden Dioden. Wird der verzögerten Umschaltung ein RC-Glied parallelgeschaltet, so ergibt sich ein gutes Löschverhalten des Umschalters, was dessen Lebensdauer erhöht.

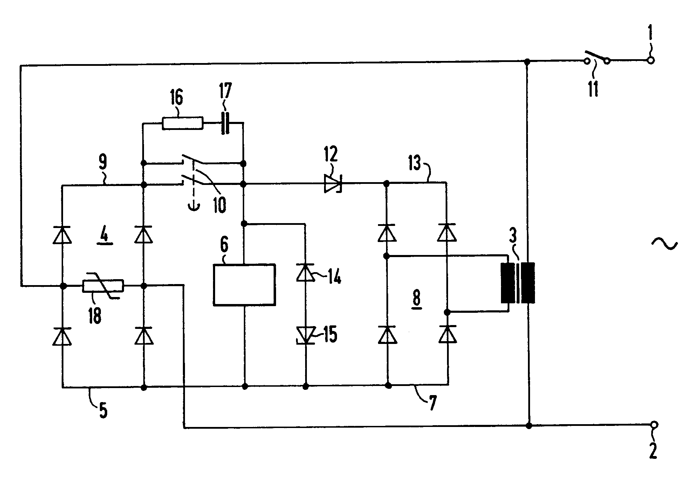

Anhand der Zeichnung wird ein Ausführungsbeispiel der Erfindung beschrieben.

Die Zeichnung stellt ein Schaltschema für das elektromagnetische Schaltgerät dar. An den Netzklemmen 1, 2 des Wechselspannungsnetzes liegt über einen Einschalter 11 einerseits die Primärseite des Transformators 3 und andererseits der Brückengleichrichter 4 für die Anzugserregung. Die Minusseite 5 des Gleichrichters liegt an dem einen Ende der Erregerspule 6 des elektromagnetischen Schaltgerätes und an der Minusseite 7 des der Sekundärwicklung des Transformators 3 nachgeschalteten Brückengleichrichters 8. Die Plusseite 9 des Brückengleichrichters 4 liegt über einen verzögert öffnenden Schalter 10 an der anderen Seite der Erregerspule 6 und über eine Zenerdiode 12 an der Plusseite 13 des Brückengleichrichters 8. Parallel zur Erregerspule 6 liegt die Reihenschaltung aus einer Diode 14 und einer Zenerdiode 15, die gegensinnig zur Diode 14 gepolt ist. Die Diode 14 liegt in Freilaufrichtung zur Erregerspule 6. Die Zenerdiode 15 ist gegensinnig zur Freilaufrichtung gepolt. Zum Schalter 10 liegt parallel die Reihenschaltung aus einem Widerstand 16 und Kondensator 17 als RC-Glied, die für ein gutes Löschverhalten des Schalters 10 sorgen. Ein in der Wechselstromdiagonale des Gleichrichters 4 liegender Varistor 18 schützt den für die Einschalterregung zuständigen Brückengleichrichter 4 und die gesamte Schaltung vor eventuellen Überspannungen.

Zur Funktion ist folgendes auszuführen: Wird der Einschalter 11 zur Betätigung des elektromagnetischen Schaltgerätes eingeschaltet, so bekommt die Erregerspule 6 zunächst über den Brükkengleichrichter 4 und den Schalter 10 die volle gleichgerichtete Netzspannung, so daß das Magnetsystem erregt und das Schaltgerät eingeschaltet wird. Die verzögerten Öffner 10 schalten im Endbereich des Einschaltweges die Gleichrichter 4 ab, so daß die Gleichrichter 8 wirksam werden. Je größer die Zenerspannung von Diode 15, umso kürzer werden die Ausschaltverzugszeiten. Beide Zenerspannungen der Dioden 12 und 15 hängen von der Nennbetätigungsspannung der Spule sowie von den gewünschten Ausschaltzeiten ab. Die Zenerspannung von Diode 12 ist größer als die der Diode 15. Solange die Summe der Diodenflußspannung an der Diode 14 und der Zenerspannung an der Zenerdiode 15 kleiner ist als die Summe der Diodenflußspannungen an den Gleichrichtern des Brückengleichrichter 8, addiert mit der Zenerspannung der Zenerdiode 12, kommutiert der Strom beim Ausschalten der Anzugserregung mittels des Schalters 10 auf die Dioden 14 und 15. Damit wird auch der Brückengleichrichter 8 nicht mit dem Anzugsstrom belastet und kann damit, wie erwähnt, günstiger dimensioniert werden.

## Patentansprüche

1. An ein Wechselspannungsnetz anschaltbares elektromagnetisches Schaltgerät mit Gleichstrommagnetsystem und einer Schalteinrichtung mit der Erregerspule vorgeschalteten Gleichrichtern und verzögerter Umschaltung von Anzugs- auf Halteerregung, wobei bei Halteerregung zwischen Wechselspannungsnetz und Halteerregungsgleichrichter ein Transformator geschaltet ist, **dadurch gekennzeichnet**, daß zwischen verzögerter Umschaltung (10) und dem Halteerregungsgleichrichter (8) eine gegensinnig gepolte Zenerdiode (12) eingeschaltet ist und daß parallel zur Erregerspule (6) eine mit einer gegensinnig gepolten Zenerdiode (15) in Reihe liegende Freilaufdiode (14) geschaltet ist.

2. Schaltgerät nach Anspruch 1, **dadurch gekennzeichnet**, daß der verzögerten Umschaltung (10) ein RC-Glied (16,17) parallelgeschaltet ist.

## Claims

1. Electromagnetic switchgear which can be connected to an a.c. voltage power supply and has a d.c. magnetic system and a switching device with rectifiers connected upstream of the excitation coil and delayed switch-over from starting excitation to holding excitation, with a transformer being connected between a.c. voltage power supply and holding excitation rectifier in the case of holding excitation, characterised in that an oppositely poled Zener diode (12) is connected in between delayed switch-over element (10) and the holding excitation rectifier (8) and in that a free-wheeling diode (14), which is connected in series with an oppositely poled Zener diode (15), is connected in parallel with the excitation coil (6).

2. Switchgear according to claim 1, characterised in that connected in parallel with the delayed switch-over element (10) there is an RC-element (16, 17).

## Revendications

1. Appareil d'interruption électromagnétique pouvant être raccordé à un réseau de tension alternative, comportant un système magnétique à courant continu et un dispositif d'interruption ayant des redresseurs branchés en amont de la bobine d'excitation, et comportant une commutation retardée de l'excitation d'actionnement à l'excitation d'arrêt, un transformateur étant branché lors de l'excitation d'arrêt entre le réseau de tension alternative et un redresseur d'excitation d'arrêt, caractérisé en ce qu'une diode Zener (12) polarisée en inverse est insérée entre la commutation (10) retardée et le redresseur (8) d'excitation d'arrêt et une diode (14) de roue libre se trouvant en série avec une diode Zener (15) polarisée en inverse est branchée en parallèle à la bobine (6) d'excitation.

2. Appareil de commutation suivant la revendication 1, caractérisé en ce qu'un circuit RC (16, 17) est branché en parallèle à la commutation (10) retardée.
